# EUROPEAN PATENT APPLICATION

(11) **EP 2 835 172 A1**
(43) Date of publication of application: **11.02.2015**
(21) Application number: 12872219.6
(22) Date of filing: 30.10.2012
(51) Int. Cl.: B01D 53/38, B01D 53/14, B01D 53/34, B01D 53/44, B01D 53/77

(54) **METHOD FOR TREATING DISCHARGE GAS**

(30) Priority: 23.03.2012 JP 2012066578
(71) Applicant: Kurushima, Takeo, Yokohama-shi, Kanagawa 236-0035 (JP)
(72) Inventor: Kurushima, Takeo, Yokohama-shi, Kanagawa 236-0035 (JP)
(74) Representative: Håmsø Patentbyrå ANS
(86) International application number: PCT/JP2012/077935
(87) International publication number: WO 2013/140653

(57) **Abstract**

The purpose of the present invention is to provide a method which is for removing offensive odors from various discharge gases other than exhaust gases of motor vehicles and with which conventional problems were solved. This method for treating a discharge gas is characterized in that in a discharge-gas treatment device in which an aqueous solution containing strongly alkaline electrolyzed water is used, the discharge gas is directly contacted and mixed with water which contains strongly alkaline electrolyzed water and which has a pH of 9 or higher and an ORP kept at 0 mV or less.

## Description

### TECHNICAL FIELD

The present invention relates to a method for treating discharge gas that is produced during various processes such as painting processes.

### BACKGROUND ART

Conventional wet cleaning methods for removing acids that are contained in discharge gas, such as introduction of chemicals and water sprinkling, commonly employ a process in which discharge gas is introduced into a solution of caustic soda so that the acids are removed by neutralization. On the other hand, methods to remove odor from discharge gas include washing, absorption, combustion, condensation, biological deodorization, ozone deodorization, photocatalytic deodorization, plasma deodorization, and use of deodorants or deodorizers.

Among a wide variety of discharge gasses that should be treated, those discharged from facilities, such as livestock production and agricultural facilities, factories of fertilizers and feed, factories of rubber, factories of painting and printing, factories of woodworking, foundries, garbage treatment plants, raw sewage treatment facilities, meat markets, composting facilities, septic tanks, laundries, and restaurants, require deodorization.

Partly because odor is generated through complicated processes, deodorization by the above-mentioned methods is often difficult and deodorization is still an outstanding issue. Especially difficult is deodorization of gas discharged during the baking step of baking finishes at high temperatures. As a result, painters receive a lot of complaints from neighbors and have one trouble after another. Odor generated during the painting process is almost a problem that may endanger the continuation of the business.

Substances causing odor from discharge gas are various. There is no method that effectively works on all the various substances. Also, even if a method that efficiently removes a particular causative substance is found, there are still a lot of difficult problems, including a precise control of the method, to make the method work well.

For example, washing is employed in many fields. Washing is especially suitable to remove putrid odor and odor of a single component that is typically generated in chemical plants. On the other hand, it is said that washing is generally not suitable to remove odor of organic solvents and scorching smell.

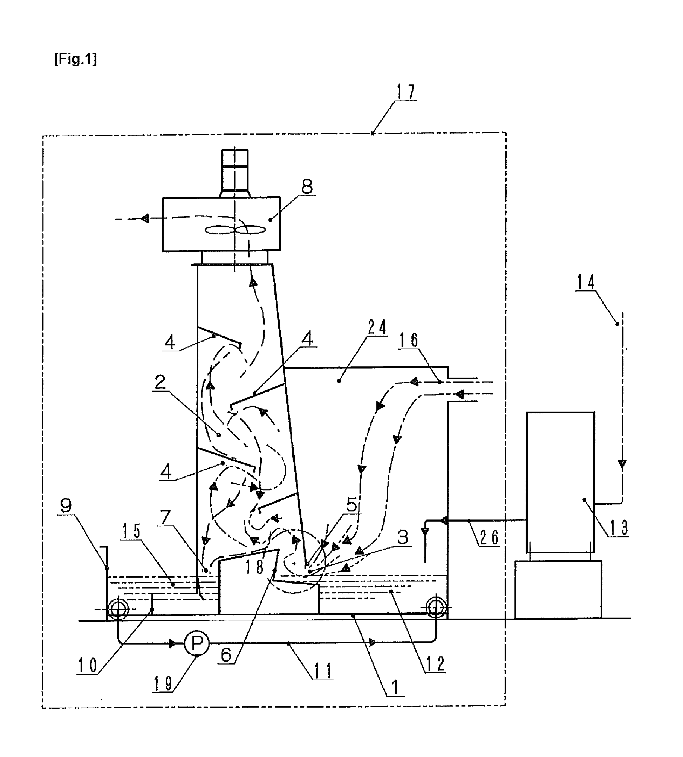

Although washing has been employed singly, it has been often used in combination with other deodorizing methods. A method of removing odor at high concentration by a combination of washing and adsorption is known well (see Figure 1).

Also, cooling of discharge gas, humidifying of discharge gas, and/or catching of dust and/or mist is often carried out as pretreatment for the deodorization.

In order to ensure that deodorizing methods and deodorizing apparatuses keep their deodorizing performance at a targeted level, you are required to suitably control the operation and to appropriately maintain the apparatus. As explained heretofore, while a number of methods for removing odor from various kinds of discharge gas are known, there are still many problems that should be solved.

### PRIOR ART DOCUMENTS

### [Patent Documents]

Patent Document 1: JP 2010-075879 A

### DISCLOSURE OF THE INVENTION

### [Problems to be Solved by the Invention]

As I explained hereinbefore, wet cleaning methods, such as introduction of chemicals and water sprinkling, employ a process in which discharge gas is introduced into a solution of caustic soda so that the acids are removed by neutralization. These methods require a large amount of chemicals dissolved in water. The management of the apparatuses is also costly because it needs a considerable amount of equipment and labor.

The objective of the present invention is to provide means to solve these conventional problems, particularly a method for removing odor from various gasses other than automotive exhaust gas. The gasses to be treated are those discharged from facilities, such as livestock production and agricultural facilities, factories of fertilizers and feed, factories of rubber, factories of painting and printing, factories of woodworking, foundries, garbage treatment plants, raw sewage treatment facilities, meat markets, composting facilities, septic tanks, laundries, and restaurants.

### [Means to Solve the Problems]

Means to solve the problem are:
<1> A method for treating discharge gas comprising, in a discharge gas-treating device using an aqueous solution containing strong alkaline electrolyzed water, directly contacting the discharge gas with the aqueous solution, wherein a pH of the aqueous solution is kept at 9 or more and an ORP thereof at 0 mV or less.
<2> A method according to item <1>, further comprising:
   adding second strong alkaline electrolyzed water whose pH is kept at 9 or more and whose ORP is kept at 0 mV to -960 mV, to a spent aqueous solution produced by the contacting of the discharge gas with the aqueous solution, so that the spent aqueous solution is restored to a recovered aqueous solution whose pH is kept at 9 or more and whose ORP is kept at 0 mV or less,
   whereby the recovered aqueous solution is circulated and reused as an aqueous solution to be directly contacted with discharge gas.
<3> The method according to item <2>, wherein the second strong alkaline electrolyzed water has a pH from 11 to 14 and an ORP from 200 mV to -960 mV.
<4> A method according to any one of items <1>-<3>, further comprising separating and collecting precipitate from the spent aqueous solution.
<5> The method according to any one of items <1>-<4>, wherein the discharge gas is carried on fast gas streams, the fast gas streams with the discharge gas strike the aqueous solution at a high velocity and directly contact therewith, so that the aqueous solution is forcedly stirred and mixed with the fast gas streams, and the precipitate is separated and collected from the spent aqueous solution produced by the direct contacting of the discharge gas with the aqueous solution containing the strong alkaline electrolyzed water.
<6> The method according to any one of items <1>-<5>, wherein the discharge gas has a temperature from 100°C to 300°C.
<7> An apparatus for treating discharge gas to carry out the method according to any one of items <1>-<6>, comprising:
   a storage tank (1) in which the aqueous solution containing strong alkaline electrolyzed water is stored;
   a casing (24) for receiving the discharge gas, the casing placed over the storage tank (1);
   an exhaust fan (8), which is a suction fan, for introducing the discharge gas into the casing (24); and
   a contacting and mixing part at which the discharge gas having been introduced into the casing (24) is directly contacted with the aqueous solution containing the strong alkaline electrolyzed water that is stored in the storage tank (1).
<8> An apparatus according to item <7>, further comprising a device for producing strong alkaline electrolyzed water (13) from which the second strong alkaline electrolyzed water is supplied to the storage tank (1).
<9> The apparatus according to item <7> or <8>, wherein the contacting and mixing part comprises:
   a cylindrical scrubber (2) with a top portion that is connected with the exhaust fan (8) and with at least one baffle (4) projecting obliquely downward from an inner wall of the cylindrical scrubber; and
   a reflecting plate or a vortex plate (6) placed in the proximity of a bottom (5) of the scrubber (2),
   wherein the scrubber (2) is placed above the storage tank (1) with a small gap between the bottom (5) and a surface of the aqueous solution containing the strong alkaline electrolyzed water.
<10> The apparatus according to item <7> or <8>, wherein the contacting and mixing part comprises:
   a showerheadnozzle (20) for spraying the aqueous solution stored in the storage tank (1) with a pump (19).
<11> The apparatus according to item <7> or <8>, wherein the contacting and mixing part comprises:
   a duct (23) for transferring an air stream (16) carrying the discharge gas, wherein the air stream with the discharge gas is blown into the aqueous solution stored in the storage tank (1) so that the aqueous solution bubbles.

The method of treating discharge gas according to the present invention is applicable to all the discharge gasses other than automotive exhaust gas. In particular, the method works effectively as a method for removing odor from gasses discharged during business operations of facilities, such as livestock production and agricultural facilities, factories of fertilizers and feed, factories of rubber, factories of painting and printing, factories of woodworking, foundries, garbage treatment plants, raw sewage treatment facilities, meat markets, composting facilities, septic tanks, laundries, and restaurants. The method is particularly effective in deodorization of gasses discharged during painting processes, especially during the baking step of baking finishes.

In the following, I will explain the present invention, taking a method of deodorization of gasses discharged during the baking step of baking finishes as an example.

The odor generated during the baking step is considered mainly due to components of the paint contained in the discharge gas, specifically components consisting of solely organic constituents or components comprising mixtures of organic constituents and at least one inorganic constituent, solvents, and aldehyde components, examples of which may include aldehydes defined by the Offensive Odor Control Act, produced during the process. As a result of intensive research on odor control in the baking step, I found that a method comprising contacting the discharge gas with an aqueous solution containing strong alkaline electrolyzed water was capable of precipitating the components of the paint contained in the gas, specifically components consisting of solely organic constituents or components comprising mixtures of organic constituents and at least one inorganic constituent, in the form of sludge and separating it, as well as removing odor very effectively.

I also found that when the discharge gas generated during the baking step was contacted with the aqueous solution containing the strong alkaline electrolyzed water, the aqueous solution drew heat from the discharge gas that was at a high temperature and lowered the temperature of the discharge gas, which resulted in very effective deodorization of the discharge gas.

According to the present invention, the discharge gas is contacted with an aqueous solution containing strong alkaline electrolyzed water, wherein the pH of the aqueous solution is kept at 9 or more and the ORP thereof is kept at 0 mV or less, so that components of paint contained in the discharge gas, which are components consisting of solely organic constituents or components comprising mixtures of organic constituents and at least one inorganic constituent, are precipitated and separated. The method works especially well if the discharge gas strikes the aqueous solution at a high velocity and directly contact therewith, so that the aqueous solution is forcedly stirred and mixed with the discharge gas, and the components of paint are precipitated and separated from the discharge gas.

Also it will prevent adhesion of the precipitate to walls of the equipment and clogging of the piping due to the precipitate, if an alcohol, as an additive, with 1 to 12 carbon atoms, especially isopropyl alcohol, in an amount of 0.01 to 10 parts by mass to 100 parts by mass of the aqueous solution, is added to the aqueous solution to be contacted with the discharge gas, the aqueous solution containing the strong alkaline electrolyzed water wherein a pH of the aqueous solution is kept at 9 or more and an ORP thereof at 0 mV or less.

### [Advantages of the Invention]

The deodorization of the discharge gas according to the present invention is capable of completely removing odor of the discharge gas at the same time as precipitating and separating components of paint, which are components consisting of solely organic constituents or components comprising mixtures of organic constituents and at least one inorganic constituent, from the discharge gas. This effect is totally unexpected from conventional treatment methods. I suppose that aldehydes contained in the discharge gas, which are a cause of the odor, are turned into condensation products with an increased molecular weight by aldol condensation when the discharge gas is treated with the aqueous solution containing the alkaline electrolyzed water, and then the condensation products join the precipitate. The odor of the aldehydes is thus removed.

This effect perfectly settles complaints from neighbors and troubles with them caused by odor of discharge gas that is generated especially during the baking step of baking finishes at high temperatures. Thus the advantage brought by this invention is remarkably important in the coating industry.

### BRIEF DESCRIPTION OF THE DRAWINGS

[Figure 1] Figure 1 is a sectional view of an apparatus for treating discharge gas, which is an embodiment of the present invention. The figure also shows a device for producing strong alkaline electrolyzed water of the present invention.
[Figure 2 ] Figure 2 shows an example of the apparatus for treating discharge gas that comprises a shower head nozzle, according to a second embodiment of the present invention.
[Figure 3] Figure 3 shows an example of the apparatus for treating discharge gas wherein the aqueous solution bubbles up, according to a third embodiment of the present invention.
[Figure 4] Figure 4 shows a state how precipitate is deposited.

### EMBODIMENTS TO CARRY OUT THE INVENTION

The inventor of the present invention found a treating method of discharge gas with an aqueous solution containing strong alkaline electrolyzed water wherein the pH of the aqueous solution was kept at 9 or more and the ORP thereof at 0 mV or less. Especially when the gas to be treated was that generated during the baking step of baking finishes, this method was capable of precipitating from the discharge gas components of the paint, which were components consisting of solely organic constituents or components comprising mixtures of organic constituents and at least one inorganic constituent, and of completely removing odor from the gas. The inventor thus completed the invention.

An intensive research by the inventor revealed that unlike the conventional treatment with city water in general use, the treatment with the aqueous solution containing strong alkaline electrolyzed water that had a special function, especially when the gas was that discharged during the baking step of baking finishes, was capable of precipitating and separating components of the paint, which were components consisting of solely organic constituents or components comprising mixtures of organic constituents and at least one inorganic constituent, contained in the discharge gas efficiently and effectively. In addition, odor of the discharge gas was capable of being completely removed.

The aqueous solution usable for the present invention containing strong alkaline electrolyzed water, to be contacted with discharge gas, should have a pH of 9 or more, preferably a pH of 11 or more, most preferably a pH of 12 or more. The upper limit of the pH is around 14, and the aqueous solution with a pH up until around 14 is usable.

The ORP of the aqueous solution has to be 0 mV or less, preferably from 0 mV to -960 mV, more preferably from -200 mV to -960 mV.

An aqueous solution with a pH of less than 9 or an ORP of more than 0 mV does not have sufficient ability to precipitate components of the paint, which are components consisting of solely organic constituents or components comprising mixtures of organic constituents and at least one inorganic constituent, from the discharge gas, so that it is not capable of separating them to a satisfactory level when the aqueous solution is contacted with the discharge gas. Such an aqueous solution is not capable of completely removing odor from the gas, either. Thus aqueous solutions that do not meet the pH and ORP requirements are not usable.

As well known to people skilled in the art, pH is a measure of the acidity or basicity of an aqueous solution, and ORP is a measure of the oxidation/reduction potential of a substance. When the ORP of a substance is 0 mV or less, the substance has reducing power. On the other hand, when the ORP of a substance is more than 0 mV, the substance has oxidizing power. Both properties may be measured with measuring instruments on the market.

The inventor of the present invention measured these properties with a Model HM-30P pH meter and a Model RM-30P ORP meter, both of which are manufactured by DKK-TOA Corporation.

In the process of the invention, discharge gas is sucked and collected by an exhaust fan, which is referred by reference numeral 8 in Figure 1. A suction fan may serve as the exhaust fan. The discharge gas strikes the aqueous solution containing the strong alkaline electrolyzed water at a high velocity in a 'crashing' manner and directly contacts therewith, so that the aqueous solution is forcedly stirred and mixed with the discharge gas, which results in a reaction between them. By the mechanism that will be explained hereinafter, components of the paint are separated and collected from the discharge gas, and odor is completely removed from it.

The aqueous solution containing the strong alkaline electrolyzed water should preferably be circulated and reused from the viewpoint of economy. The aqueous solution containing the strong alkaline electrolyzed water may sometimes include fine granules, even after components of the paint, which are components consisting of solely organic constituents or components comprising mixtures of organic constituents and at least one inorganic constituent, are precipitated and separated. However, the inclusion of such fine granules will not cause serious problems.

The present invention prefers directly contacting the discharge gas with the aqueous solution that contains the strong alkaline electrolyzed water at a high velocity in a striking manner so that the aqueous solution is forcedly stirred with the discharge gas, to just contacting the former with the latter directly. The contacting in a striking manner ensures that components of the paint, which are components consisting of solely organic constituents or components comprising mixtures of organic constituents and at least one inorganic constituent, are precipitated and separated from the discharge gas and simultaneously odor is removed from it.

For example, the discharge gas is caught by fast gas streams, preferably gas streams with a velocity of 10 m/s or more, generated by the exhaust fan, or the suction fan, which is referred to by reference numeral 8 in Figure 1. The discharge gas carried on the fast gas streams is directly blown into the aqueous solution at a high velocity with great force, so that the streams with the discharge gas forcibly stirs the aqueous solution. This process makes components of the paint contained in the discharge gas separate from the gas (see Figure 1).

The discharge gas contains particulates composed of organic matters and inorganic fillers. This discharge gas is drawn to a stirring and mixing part (reference numeral 18 in Figure 1), borne on gas streams (reference numeral 16 in Figure 1) generated by the exhaust fan (reference numeral 8 in Figure 1), or the suction fan, of the deodorizing apparatus. Fast gas streams, preferably with a velocity of 30 m/s or more, are created at the stirring and mixing part. The created fast gas streams make the discharge gas strike the aqueous solution containing the strong alkaline electrolyzed water in a 'crashing' manner and directly contact therewith directly. The velocity of the gas streams 16 is increased when the streams pass through a small gap 3, and is made turbulent by the Reynolds effect. The turbulent flow creates a negative pressure around the part, by which the aqueous solution containing the strong alkaline electrolyzed water is drawn up and raised. This process finally leads to the state where the aqueous solution is forcibly stirred and mixed with the gas streams. The aqueous solution fiercely strikes the discharge gas to force components of the paint into precipitating from the discharge gas and to remove odor therefrom simultaneously.

I will explain the strong alkaline electrolyzed water next.

The strong alkaline electrolyzed water for the present invention, which is produced by an ordinary device for producing strong alkaline electrolyzed water, needs to have a pH of 9.5 or more and an ORP from 0 mV to -960 mV, preferably a pH from 11 to 14 and an ORP from -200 mV to -960 mV. The ORP may be smaller than -960 mV.

Strong alkaline electrolyzed water is produced from water by electricity. The principle and method for the production is widely publicized and is commonly known.

The electrolyte suitably used for the production of strong alkaline electrolyzed water is potassium carbonate. An aqueous solution of potassium carbonate as raw water is supplied to the device for producing strong alkaline electrolyzed water. Although potassium carbonate is used as an electrolyte, the produced strong alkaline electrolyzed water does not contain potassium carbonate. Since the water contains no chemically synthesized substances, the BOD value, which BOD stands for biological oxygen demand, the COD value, which COD stands for chemical oxygen demand, the amount of N-hexane, which is an indicator of the oil content, and the SS value, which SS stands for suspended substance, of the produced strong alkaline electrolyzed water are zero.

The pH and the ORP of the strong alkaline electrolyzed water of the present invention maybe controlled independently. Because of the pH within the specified particular range and the ORP within the specified particular range, the strong alkaline electrolyzed water has a large amount of electrons and strong intermolecular attraction (or an electron deprivation function) . This property makes the water antiseptic. Also, the amount of dissolved hydrogen in the strong alkaline electrolyzed water is large, while that of dissolved oxygen in the water is small. Thus the water is capable of preventing its deterioration and it works as a deodorant.

Although the alkaline electrolyzed water should preferably have a temperature from 40°C to 70°C, the water may work even at a temperature less than 40°C.

The method of treating discharge gas according to the present invention is capable of preventing odor from diffusing to the environs of a structure where the apparatus for treating discharged gas is installed and capable of providing workers at the structure with a better work environment and ensuring neighbors of the structure a good living environment.

Also, components of the paint, i.e. components consisting of solely organic constituents of components comprising mixtures of organic constituents and at least one inorganic constituent, which have been precipitated and separated from the discharge gas, may be removed or collected manually or automatically. The collected components may be utilized as a submaterial for cement and similar substances.

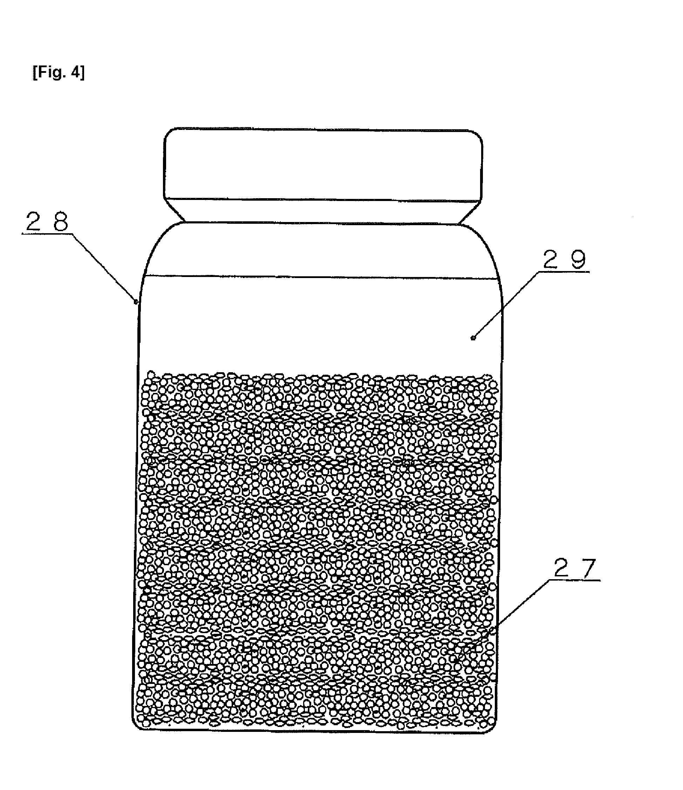

I will explain the embodiments of the present invention, referring to Figures 1-4.

### (Working Example 1)

Discharge gas generated during a baking step of a melamine baking finish, which will be simply called discharge gas hereinafter, was continuously treated for eight hours with an aqueous solution containing strong alkaline electrolyzed water whose pH was kept from 9.5 to 10 and whose ORP was kept from -200 mV to -960 mV. The apparatus for treating discharge gas shown in Figure 1 was used in this treatment. This treatment deodorized the discharge gas to such an extent that the treated gas had no smell.

Components of the paint, or components consisting of solely organic constituents or components comprising mixtures of organic constituents and at least one inorganic constituent, which had been precipitated and separated from the discharge gas, were easily collected as sediment, although some of them adhered to the inner wall of the apparatus. This sediment did not smell, either.

I will explain the apparatus for treating discharge gas shown in Figure 1 in detail.

Macroscopically, the apparatus for treating discharge gas 17 has a storage tank 1 in which a circulated aqueous solution 12 that contains strong alkaline electrolyzed water whose pH and ORP are respectively kept from 9.5 to 10 and from -200 mV to -960 mV, a scrubber 2, which is an example of a gas-liquid separator, and a separation tank 9.

Drawing air with an exhaust fan 8, which is a suction fan, with which the apparatus 17 is equipped, creates a negative pressure in the scrubber 2. This negative pressure generates fast gas streams 16, shown by the arrows in the figure, which flow through a small gap 3 formed between the bottom 5 of the scrubber 2 and the surface of the stored aqueous solution 12 that is being circulated.

Discharge gas generated during the baking step of baking finishes are borne on the gas streams 16 and drawn into the scrubber 2, which is an example of a gas-liquid separator, through the small gap 3. When the gas streams 16 flow through the gap 3, the streams become fast gas streams whose velocity reaches 10 m/s or more. A reflecting plate 6 (or a vortex plate) is placed in the proximity of the gap 3. This arrangement forms a stirring and mixing part 18 where the fast gas streams flowing at a velocity of 10 m/s or more, the circulated aqueous solution 12, and the discharge gas are rotated fiercely along the reflecting plate 6 (or the vortex plate), and they are stirred and mixed forcibly.

The circulated aqueous solution 12 mixed with the discharge gas that has been carried on the fast gas streams strikes baffles 4 arranged in the scrubber 2 (or the gas-liquid separator), and loses momentum. As a result, the circulated aqueous solution 12 that has caught components of the paint, which are components consisting of solely organic constituents or components comprising mixtures of organic constituents and at least one inorganic constituent, falls in drops and flows to the separation tank 9 through a chute 7 of the scrubber 2. The discharge gas from sludge which sludge containing the organic constituents or containing the organic constituents and at least one inorganic constituent has been removed is emitted and released into the surrounding air with the exhaust fan 8, or the suction fan.

The separation tank 9 has a weir 10 fixed to the bottom of the water tank 1. The weir 10 is submerged so that the crest thereof is placed at a depth of about one fourth (1/4) of the depth of water. Because of this weir, deposited sludge with a greater specific gravity is blocked by the weir 10 and accumulated at the upstream side of the weir. On the other hand, floating sludge with a smaller specific gravity composed of organic components is borne on the flow and gathered at the inner wall of the separation tank 9.

A piping 11 communicating with the storage tank 1 is connected to a downstream part of the separation tank 9. A spent aqueous solution containing strong alkaline electrolyzed water, which has been used to treat the discharge gas, is returned to the storage tank 1 and reused as circulated aqueous solution 12 for treating discharge gas.

In the separation tank 9, the sludge with a greater specific gravity, which is now sediment, has settled at the weir 10, while the sludge with a smaller specific gravity, which is now floating matter, stays and accumulates at the inner wall of the separation tank 9. The sediment and floating matter is removed from the tank automatically or manually.

In the apparatus shown in Figure 1, the level of the surface of the circulated aqueous solution 12 in the storage tank 1 is controlled so that the distance of the gap 3 is adjusted. Also, strong alkaline electrolyzed water 26 is supplied to the tank from the device for producing strong alkaline electrolyzed water 13 according to circumstances, so that the pH of the circulated aqueous solution 12 and the ORP thereof are appropriately adjusted. Thus, forcible stirring and mixing at the stirring and mixing part 18 function satisfactorily.

I suppose that the mechanism for separating components of the paint from discharge gas generated during a baking step of baking finishes with the aqueous solution containing strong alkaline electrolyzed water 26, i.e. circulated aqueous solution 12, and the mechanism for removing odor from the discharge gas with the solution are as follows:
1) Components consisting of solely organic constituents or components comprising mixtures of organic constituents and at least one inorganic constituent contained in discharge gas that is generated during a baking step of baking finishes are fiercely struck by the aqueous solution so that they are precipitated out and separated from the discharge gas.

On the other hand, aldehydes contained in the discharge gas, which are a cause of the odor, are turned into condensation products with an increased molecular weight by aldol condensation when the discharge gas is treated with the aqueous solution. Then, the condensation products join the precipitate, whereby the odor of the aldehydes is removed.

After treating the discharge gas in the way I explained in paragraphs [0025]-[0034] by means of the apparatus 11 for treating discharge gas, the structure of which is shown in Figure 1, I observed a sample of the circulated aqueous solution 12 taken at around the bottom of the separation tank 9 in the proximity of the chute 7 of the scrubber 2, or a gas-liquid separator. The observation revealed that the components in discharge gas had been precipitated into a mixture of organic constituents and at least one inorganic constituent, which formed sediment.

An analysis of the sediment 27 identified elements such as Si, S, Ca, Cr, Fe, and Zn.

Metals contained in the sludge, which was precipitated from the discharge gas that had been generated during the baking step of baking finishes, were measured and the results are shown in Table 1.

**[Table 1]**

| | Elements | Distribution ratio |
|---|---|---|
| 1 | Si | 1 |
| 2 | S | 0.06 |
| 3 | Ca | 0.46 |
| 4 | Cr | 0.05 |
| 5 | Fe | 0.3 |
| 6 | Cu | 0.1 |
| 7 | Zn | 0.23 |

Method of Analysis : Energy dispersive spectrometry with an X-ray analytical microscope carried out by the Kanagawa Industrial Technology Center. The distribution ratio of each element is the value of each element to that of Si which is regarded as 1.0.

The apparatus for treating discharge gas, shown in Figure 1 as an example, used the aqueous solution containing strong alkaline electrolyzed water according to the present invention. Thus the circulated aqueous solution 12 stored in the storage tank 1 did not deteriorate. The apparatus according to the present invention was capable of preventing odor from diffusing to the environs of a paint shop. The invention was capable of realizing a better work environment for workers at the paint shop and a good living environment for neighbors thereof. The present invention was also capable of providing a closed system that did not require exchange of the circulated aqueous solution 12 throughout the year. As a result, the cost of operating the apparatus was decreased.

The aqueous solution containing strong alkaline electrolyzed water 26, when employed for treating discharge gas, fiercely strikes the discharge gas that is generated during the baking step of baking finishes to force components consisting of solely organic constituents or components comprising mixtures of organic constituents and at least one inorganic constituent into precipitating from the discharge gas as sediment.

### (Working Example 2)

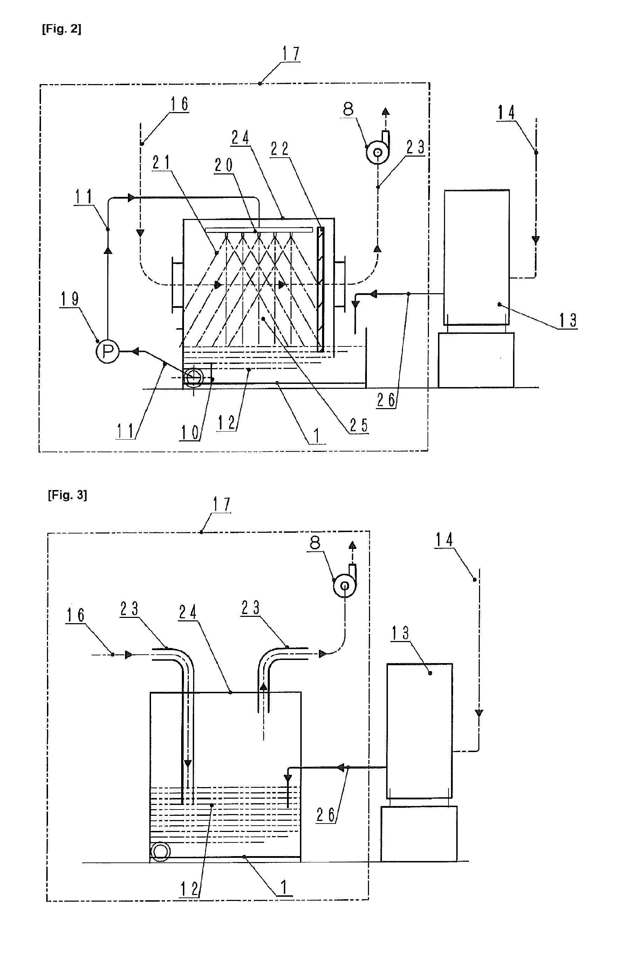

Discharge gas was treated with the same method as in Working Example 1, except the shower-head type apparatus for treating discharge gas shown in Figure 2 was used in place of the apparatus shown in Figure 1. This treatment deodorized the discharge gas to such an extent that the treated gas had essentially no smell, although the deodorization of this example was somewhat inferior to that of Working Example 1.

Components of the paint, which were a mixture of organic constituents and at least one inorganic constituent that had been precipitated and separated from the discharge gas, were easily collected as sediment, although some of them adhered to the inner wall of the apparatus. This sediment did not smell, either.

### (Comparative Example 1)

Discharge gas was treated with the same method as in Working Example 1, except that city water was used in place of the strong alkaline electrolyzed water. As a result, the precipitate was an odorous suspension. The system was not recognized as that having deodorizing effect.

### (Comparative Example 2)

Discharge gas was treated with the same method as in Working Example 1, except that instead of the aqueous solution of the working example was used an aqueous solution containing strong alkaline electrolyzed water wherein the pH of the aqueous solution was kept at 9.5 to 10 and the ORP thereof at +200 mV. As a result, the precipitate was an odorous suspension. The system was not recognized as that having deodorizing effect.

### (Working Example 3)

Discharge gas was treated with the same method as in Working Example 1, except that one part by mass of isopropyl alcohol, as an additive, to 100 parts by mass of the aqueous solution containing strong alkaline water was further contained in the aqueous solution. The addition of isopropyl alcohol remarkably reduced adhesion of the formed precipitate to the wall of the tank. This method also enjoyed the effects of Working Example 1.

### INDUSTRIAL APPLICABILITY

From the viewpoint of arresting diffusion of odor to the atmosphere, deodorization is indispensable. However, measures against odor taken by small and medium enterprises have made little progress so far, because it costs a lot to collect substances that emit offensive odor, such as organic solvents. The method according to the present invention is much more advantageous in control and maintenance than conventional methods of treating discharge gas. Thus, the method of the invention is expected to remarkably improve deodorization of discharge gas, especially generated during the baking step of baking finishes.

### EXPLANATION OF REFERENCE NUMERALS

- 1: storage tank
- 2: scrubber as an example of a gas-liquid separator
- 3: gap
- 4: baffles
- 5: bottom
- 6: reflecting plate
- 7: chute
- 8: exhaust fan which is a suction fan
- 9: separation tank
- 10: weir
- 11: piping
- 12: circulated aqueous solution
- 13: device for producing strong alkaline electrolyzed water
- 14: raw water
- 15: sludge
- 16: gas streams carrying discharge gas
- 17: apparatus for treating discharge gas
- 18: stirring and mixing part
- 19: pump
- 20: shower head nozzle
- 21: sprayed water
- 22: gas-liquid separator
- 23: duct
- 24: casing
- 25: water-spraying zone

## Claims

1. A method for treating discharge gas comprising, in a discharge gas-treating device using an aqueous solution containing strong alkaline electrolyzed water, directly contacting the discharge gas with the aqueous solution, wherein a pH of the aqueous solution is kept at 9 or more and an ORP thereof at 0 mV or less.

2. A method according to claim 1, further comprising:
adding second strong alkaline electrolyzed water whose pH is kept at 9 or more and whose ORP is kept at 0 mV to -960 mV, to a spent aqueous solution produced by the contacting of the discharge gas with the aqueous solution, so that the spent aqueous solution is restored to a recovered aqueous solution whose pH is kept at 9 or more and whose ORP is kept at 0 mV or less,
whereby the recovered aqueous solution is circulated and reused.

3. The method according to claim 2, wherein the second strong alkaline electrolyzed water has a pH from 11 to 14 and an ORP from 200 mV to -960 mV.

4. A method according to any one of claims 1-3, further comprising separating and collecting precipitate from the spent aqueous solution.

5. The method according to any one of claims 1-4, wherein the discharge gas is carried on fast gas streams, the fast gas streams with the discharge gas strike the aqueous solution at a high velocity and directly contact therewith, so that the aqueous solution is forcedly stirred and mixed with the fast gas streams, and the precipitate is separated and collected from the spent aqueous solution produced by the direct contacting of the discharge gas with the aqueous solution containing the strong alkaline electrolyzed water.

6. The method according to any one of claims 1-5, wherein the discharge gas has a temperature from 100°C to 300°C.

7. An apparatus for treating discharge gas to carry out the method according to any one of claims 1-6, comprising:
a storage tank (1) in which the aqueous solution containing strong alkaline electrolyzed water is stored;
a casing (24) for receiving the discharge gas, the casing placed over the storage tank (1);
an exhaust fan (8), which is a suction fan, for introducing the discharge gas into the casing (24); and
a contacting and mixing part at which the discharge gas having been introduced into the casing (24) is directly contacted with the aqueous solution containing the strong alkaline electrolyzed water that is stored in the storage tank (1).

8. An apparatus according to claim 7, further comprising a device for producing strong alkaline electrolyzed water (13) from which the second strong alkaline electrolyzed water is supplied to the storage tank (1).

9. The apparatus according to claim 7 or 8, wherein the contacting and mixing part comprises:
a cylindrical scrubber (2) with a top portion that is connected with the exhaust fan (8) and with at least one baffle (4) projecting obliquely downward from an inner wall of the cylindrical scrubber; and
a reflecting plate or a vortex plate (6) placed in the proximity of a bottom (5) of the scrubber (2),
wherein the scrubber (2) is placed above the storage tank (1) with a small gap between the bottom (5) and a surface of the aqueous solution containing the strong alkaline electrolyzed water.

10. The apparatus according to claim 7 or 8, wherein the contacting and mixing part comprises:
a showerheadnozzle (20) for spraying the aqueous solution stored in the storage tank (1) with a pump (19).

11. The apparatus according to claim 7 or 8, wherein the contacting and mixing part comprises:
a duct (23) for transferring an air stream (16) carrying the discharge gas, wherein the air stream with the discharge gas is blown into the aqueous solution stored in the storage tank (1) so that the aqueous solution bubbles.
